(19) Europäisches Patentamt
European Patent Office
Office européen des brevets

(11) **EP 1 425 339 B1**

(12) **FASCICULE DE BREVET EUROPEEN**

(45) Date de publication et mention
de la délivrance du brevet:
**26.07.2006 Bulletin 2006/30**

(21) Numéro de dépôt: **02769470.2**

(22) Date de dépôt: **07.05.2002**

(51) Int Cl.:
**C08K 3/04** (2006.01)

(86) Numéro de dépôt international:
**PCT/EP2002/005020**

(87) Numéro de publication internationale:
**WO 2002/092680 (21.11.2002 Gazette 2002/47)**

(54) **COMPOSITION DE CAOUTCHOUC POUR ARMATURE DE SOMMET DE PNEUMATIQUE**

KAUTSCHUKZUSAMMENSETZUNG ZUR REIFENSCHEITELLAGENVERSTÄRKUNG

RUBBER COMPOSITION FOR TYRE CROWN PLY REINFORCEMENT

(84) Etats contractants désignés:
**AT BE CH CY DE DK ES FI FR GB GR IE IT LI LU MC NL PT SE TR**

(30) Priorité: **16.05.2001 FR 0106490**

(43) Date de publication de la demande:
**09.06.2004 Bulletin 2004/24**

(73) Titulaires:
• **Société de Technologie Michelin
63000 Clermont-Ferrand Cedex 09 (FR)**
• **MICHELIN RECHERCHE ET TECHNIQUE S.A.
1763 Granges-Paccot (CH)**

(72) Inventeur: **CHAUVIN, Brigitte
F-63400 Chamalières (FR)**

(74) Mandataire: **Hiebel, Robert
Manufacture Française des Pneumatiques,
Michelin,
Service SGD/LG/PI LADOUX
63040 Clermont-Ferrand Cedex 09 (FR)**

(56) Documents cités:
**EP-A- 0 803 535        FR-A- 2 721 038
US-A- 5 639 817**

**Description**

La présente invention concerne une composition de caoutchouc présentant une hystérèse réduite qui est utilisable dans une armature de sommet d'une enveloppe de pneumatique destinée à porter de lourdes charges, telle qu'une enveloppe poids-lourd ou génie civil. L'invention concerne également une telle armature de sommet et une telle enveloppe.

Les enveloppes à carcasse radiale pour véhicules à moteur portant de lourdes charges, en particulier pour véhicules poids-lourds, comportent des armatures qui sont constituée de renforts ou de nappes de fils métalliques enrobés d'élastomères. Plus précisément, ces enveloppes comportent, dans leur zone basse, une ou plusieurs tringles, une armature de carcasse allant d'une tringle à l'autre et, en leur sommet, une armature de sommet comportant au moins deux nappes de sommet.

Ces enveloppes poids-lourd sont conçues pour pouvoir être rechapées une où plusieurs fois lorsque les bandes de roulement qu'elles comportent atteignent un degré d'usure critique après un roulage prolongé, ce qui implique de disposer d'une carcasse dont l'armature de sommet n'a pas subi de dommage significatif, pour chaque enveloppe à rechaper dont la bande de roulement a atteint ce degré d'usure.

A cet effet, l'armature de sommet doit être la plus cohésive possible pour résister aux sollicitations mécaniques au cours du roulage, c'est à dire qu'elle doit présenter une rigidité élevée à faible déformation, car elle contribue d'une manière substantielle à rigidifier le sommet de l'enveloppe, et son hystérèse doit être la plus réduite possible, pour minimiser l'échauffement en roulage de la zone interne du sommet et limiter également l'évolution thermochimique et éventuellement thermo-oxydante des compositions internes. On cherche de cette manière à minimiser la fragilisation de l'enveloppe et à retarder l'apparition de dommages dans celle-ci, principalement aux extrémités des nappes de sommet, c'est-à-dire dans la zone « d'épaule » de ladite enveloppe.

Il est connu de l'homme de l'art que l'utilisation, dans une composition de caoutchouc pour armature de sommet et selon une quantité d'environ 50 pce (parties en poids pour cent parties d'élastomère(s)), d'un noir de carbone de grade 300 relativement structuré, tel que le noir N347, permet d'améliorer la cohésion, l'endurance et l'hystérèse de cette composition, ce qui confère une durée de vie supérieure à l'armature de sommet et, par conséquent, à l'enveloppe de pneumatique correspondante.

Il est également connu que les noirs de carbone grossiers, tels que le noir N539, ne confèrent une cohésion suffisante à une composition d'armature de sommet que si ces noirs sont présents dans cette composition selon une quantité très élevée, ce qui a pour effet indésirable de pénaliser l'hystérèse de ladite composition.

Le document de brevet japonais JP-A-04/274 901 divulgue l'utilisation de noirs de carbone spécifiques répartis dans au moins trois compositions de caoutchouc correspondant respectivement à diverses zones d'une même enveloppe de pneumatique de poids réduit, pour conférer à cette enveloppe des propriétés de résistance au roulement et de renforcement améliorées, en comparaison de celles présentées par une enveloppe dont les mêmes zones comportent des compositions comprenant chacune un noir de carbone de grade 300.

Ces noirs de carbone spécifiques présentent une surface spécifique $N_2SA$ (mesurée d'après la norme ASTM D3037 de 1984) allant de 60 à 84 $m^2/g$, une valeur de structure « DBP » (mesurée d'après la norme JIS K 6221) allant de 120 à 200 ml/ 100 g et ils présentent une chimie de surface qui est telle que le rapport « $N_2SA/IA$ » de ladite surface spécifique à l'indice d'adsorption d'iode « IA » (également mesuré d'après la norme JIS K 6221) est égal ou supérieur à 1,10.

Le document de brevet japonais JP-A-02/103 268 présente l'utilisation de noirs de carbone pour améliorer les propriétés hystérétiques et de renforcement de compositions de caoutchouc pour armature de carcasse d'une enveloppe de pneumatique, ou généralement destinées à amortir les vibrations.

Ces noirs de carbone présentent une surface spécifique CTAB (mesurée d'après la norme ASTM D3765-80) allant de 50 à 75 $m^2/g$, une valeur de structure « DBP » (mesurée d'après la norme JIS K 6221) égale ou supérieure à 105 ml/100 g et ils présentent une chimie de surface qui est telle que le rapport « $N_2SA/IA$ » de la surface spécifique « $N_2SA$ » (mesurée d'après la norme ASTM D3037-86) à l'indice d'adsorption d'iode « IA » (mesuré d'après la norme JIS K 6221) est égal ou supérieur à 1,10.

Ces deux derniers documents ne divulguent pas des compositions de caoutchouc spécifiquement destinées à une armature de sommet d'une enveloppe de pneumatique destinée à porter de lourdes charges.

La demanderesse vient de découvrir d'une manière surprenante que l'association, à une matrice élastomère comprenant du caoutchouc naturel ou un polyisoprène de synthèse à titre majoritaire, d'une charge renforçante comprenant un noir de carbone satisfaisant à la fois aux conditions suivantes :

  (i) 45 ≤ surface spécifique CTAB en $m^2/g$ (selon la norme ASTM D3765-80) ≤ 70,
  (ii) 45 ≤ surface spécifique BET en $m^2/g$ (selon la norme ASTM D4820-93) ≤ 70,
  (iii) 45 ≤ indice d'adsorption d'iode IA en mg/g (selon la norme ASTM D1510-81) ≤ 70
  (iv) rapport (surface BET / indice IA) ≤ 1,07;

(v) $115 \leq$ valeur de structure DBP en ml/ 100 g (selon la norme ASTM D2414-93) $\leq 170$,

(vi) 85 nm $\leq$ diamètre de Stokes dst en nm $\leq 145$,

où dst est le diamètre d'agrégats correspondant à la fréquence maximale des diamètres de Stokes dans une distribution d'agrégats, et

(vii) D50/dst $\geq$ 0,0090. CTAB + 0,19,

où D50 est la différence, dans la distribution d'agrégats, entre les diamètres de Stokes de deux agrégats correspondant à une même fréquence égale à 50 % de la fréquence maximale des diamètres de Stokes, dst et D50 étant mesurés par photo-sédimentométrie centrifuge,

permet d'obtenir une composition de caoutchouc réticulable ou réticulée qui est utilisable dans une armature de sommet d'une enveloppe de pneumatique poids-lourd ou génie civil et qui présente à l'état réticulé des propriétés hystérétiques améliorées à des déformations élevées, en comparaison des propriétés hystérétiques de compositions connues comprenant un noir de carbone de grade 300 et présentant un même module d'allongement à faible déformation.

On notera que les noirs de carbones utilisables dans les compositions d'armature de sommet de l'invention diffèrent notamment des noirs utilisés à ce jour dans ces compositions par la valeur relativement réduite du rapport (surface BET / indice IA) et par le rapport D50/dst qui croît avec la surface spécifique CTAB, ces rapports conférant respectivement aux noirs selon l'invention une chimie de surface et une morphologie particulièrement adaptée.

La matrice élastomère de la composition de caoutchouc selon l'invention peut avantageusement être constituée de caoutchouc naturel ou de polyisoprène de synthèse, ou bien d'un coupage de caoutchouc naturel ou de polyisoprène de synthèse avec un ou plusieurs autres élastomères diéniques.

Dans ce second cas, le caoutchouc naturel ou le polyisoprène de synthèse sont présents à titre majoritaire dans la matrice, c'est-à-dire selon une quantité supérieure à 50 pce (parties en poids pour cent parties d'élastomères). De préférence, le caoutchouc naturel ou le polyisoprène sont présents selon une quantité supérieure à 70 pce.

Parmi les élastomères diéniques pouvant être utilisés en coupage avec le caoutchouc naturel ou le polyisoprène de synthèse, on peut citer les élastomères diéniques fonctionnels ou non appartenant au groupe constitué par les polybutadiènes, les copolymères de styrène et de butadiène (SBR) préparés en solution ou en émulsion, les copolymères de butadiène et d'isoprène (BIR) et les terpolymères de styrène, de butadiène et d'isoprène (SBIR).

De préférence, le polybutadiène utilisé comprend une majorité d'enchaînements cis-1,4 et le SBR utilisé comprend une majorité d'enchaînements trans-1,4.

Ces élastomères peuvent être modifiés en cours de polymérisation ou après la polymérisation, au moyen d'agents ramifiants tels que le divinylbenzène, ou d'agents de couplage ou d'étoilage tels que des carbonates, des halogéno-étains, des halogéno-siliciums, ou bien encore au moyen d'agents de fonctionnalisation conduisant à un greffage sur la chaîne ou en bout de chaîne de groupes hydroxyle, carbonyle, carboxyle ou bien de groupes amine (par exemple au moyen de la diméthylamino-benzophénone ou de la diéthylamino-benzophénone, à titre d'agent de fonctionnalisation).

Selon une autre caractéristique de l'invention, ledit noir de carbone satisfait en outre à la condition suivante :

(viii) $80 \leq$ valeur de structure DBPC en ml/ 100 g (selon la norme ASTM D3493-91) $\leq 130$, DBPC étant mesurée après 4 compressions à 24 000 psi soit 172*10$^4$ Pa.

De préférence, cette condition (viii) est la suivante :

(viii) $85 \leq$ valeur de structure DBPC en ml/ 100 g $\leq 125$.

Le noir de carbone utilisé dans la composition selon l'invention est de préférence tel que lesdites conditions (i) à (iii) sont les suivantes:

(i) $50 \leq$ surface spécifique CTAB en m$^2$/g $\leq 65$,

(ii) $50 \leq$ surface spécifique BET en m$^2$/g $\leq 65$,

(iii) $50 \leq$ indice d'adsorption d'iode IA en mg/g $\leq 65$.

Egalement à titre préférentiel, le noir de carbone selon l'invention est tel que ladite condition (iv) est la suivante :

(iv) rapport (surface BET) / (indice IA) $\leq 1,05$.

Egalement à titre préférentiel, le noir de carbone selon l'invention est tel que ladite condition (v) est la suivante :

(v) $120 \leq$ valeur de structure DBP en ml/100 g $\leq 165$.

Egalement à titre préférentiel, le noir de carbone selon l'invention est tel que ladite condition (vi) est la suivante :

(vi) 90 nm $\leq$ diamètre de Stokes dst en nm $\leq 140$.

Egalement à titre préférentiel, le noir de carbone selon l'invention est tel que ladite condition (vii) est la suivante :

(vii) D50/dst $\geq 0,0092$. CTAB + 0,21.

On mesure les valeurs dst et D50 au moyen d'un photosédimentomètre centrifuge de type « DCP » (Disk Centrifuge Photosedimentometer), qui est commercialisé par la société Brookhaven Instruments. Le mode opératoire est le suivant pour ces mesures :

On sèche un échantillon de noir de carbone, conformément à la norme JIS K6221 (1975). Puis on met en suspension 10 mg de noir de carbone ainsi séché dans 40 ml d'une solution aqueuse à 15 % d'éthanol et 0,05 % d'un agent tensioactif non ionique (en volume).
On obtient la dispersion de noir de carbone par un traitement aux ultrasons durant 10 minutes, au moyen d'une sonde à ultrasons de 600 Watts. On utilise à cet effet un sonificateur de dénomination « Vibracell½ pouce » commercialisé par la société Bioblock et réglé à 60 % de sa puissance (soit à 60 % de l'amplitude maximale).
On injecte dans le disque du sédimentomètre, en rotation à 8 000 tours par minute, un gradient composé de 15 ml d'eau (à 0,05 % de tensioactif non ionique) et de 1 ml d'éthanol, puis on injecte 0,30 ml de la suspension de noir de carbone à la surface du gradient. La courbe de distribution en masse de taille d'objet est enregistrée pendant 120 minutes. Un logiciel fournit lesdites valeurs dst et D50 en nm.

Le noir de carbone selon l'invention peut être utilisé seul à titre de charge renforçante, ou bien en coupage avec une charge inorganique renforçante. La quantité de noir de carbone utilisée peut varier de 30 pce à 70 pce et, de préférence, de 35 à 65 pce.

En cas de coupage avec une charge inorganique renforçante, ledit noir de carbone est présent à titre majoritaire dans la charge renforçante (i.e. selon une fraction massique supérieure à 50 %). De préférence, la fraction massique de noir de carbone dans la charge renforçante est supérieure à 70 %.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est, en totalité ou tout du moins majoritairement, de la silice ($SiO_2$). La silice utilisée peut être toute silice renforçante connue de l'homme du métier, notamment toute silice précipitée présentant une surface BET ainsi qu'une surface spécifique CTAB toutes deux inférieures à 450 m$^2$/g, même si les silices précipitées hautement dispersibles sont préférées.

A titre encore plus préférentiel, ladite silice présente des surfaces spécifiques BET ou CTAB qui vont toutes deux de 70 à 250 m$^2$/g et, de_préférence, de 80 à 240 m$^2$/g.

La surface spécifique BET de la silice est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer les silices Perkasil KS 430 de la société Akzo, les silices BV 3380 et BV3370GR de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans le document de brevet européen EP-A-0 735 088.

D'autres silices qui sont non hautement dispersibles, telles que la silice Perkasil KS404 de la société Akzo et les silices Ultrasil VN2 ou VN3, peuvent aussi être utilisées.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

A titre de charge inorganique renforçante, on peut également utiliser, à titre non limitatif, des alumines (de formule $Al_2O_3$), telles que les alumines à dispersibilité élevée qui sont décrites dans le document de brevet européen EP-A-810 258, ou encore des hydroxydes d'aluminium, tels que ceux décrits dans le document de brevet international WO-A-99/28376.

Conviennent également, à titre de charge inorganique renforçante, les noirs de carbone modifiés par de la silice tels que, à titre non limitatif, les charges commercialisées par la société CABOT sous la dénomination « CRX 2000 », et qui sont décrites dans le document de brevet international WO-A-96/37547.

Les compositions conformes à l'invention peuvent réticuler sous l'action du soufre, des peroxydes ou de bismàléimides avec ou sans soufre. Elles peuvent également contenir les autres constituants habituellement utilisés dans les mélanges de caoutchouc, comme des plastifiants, des pigments, des antioxydants, des agents de mise en oeuvre, des accélérateurs de réticulation tels que les dérivés du benzothiazole, la diphénylguanidine et, dans le cas présent de compositions de caoutchouc pour armature de sommet prévues pour présenter une adhésion satisfaisante au métal, un sel de cobalt et/ou une association silice/ résine.

Les compositions conformes à l'invention peuvent être préparées selon des procédés connus de travail thermomécanique des constituants en une ou plusieurs étapes. On peut par exemple les obtenir par un travail mécanique dans un mélangeur interne, en une étape qui dure de 3 à 7 minutes avec une vitesse des palettes de 50 tours par minute, ou en deux étapes qui durent respectivement 3 à 5 minutes et 2 à 4 minutes suivies d'une étape de finition effectuée à environ 80 °C, pendant laquelle sont incorporés le soufre et les accélérateurs de vulcanisation dans le cas d'une composition réticulée au soufre.

Une armature de sommet d'une enveloppe de pneumatique selon l'invention comporte une composition de caoutchouc telle que définie précédemment.

Une enveloppe de pneumatique poids-lourd ou génie civil selon l'invention est telle qu'elle comporte cette armature de sommet.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans ces exemples, les propriétés des compositions sont évaluées comme suit :

Viscosité Mooney

La viscosité Mooney ML (1 +4) est mesurée selon la norme ASTM D1646.

Dureté Shore A

La dureté Shore A est mesurée conformément à la norme ASTM D2240 (1997).

Modules d' allongement

On mesure les modules d'allongement à 10 % (M10) à la température de 23° C selon la norme ASTM D412-98 sur des éprouvettes ASTM C. Ce sont des modules sécants vrais en MPa, c'est à dire les modules sécants calculés en se ramenant à la section réelle de l'éprouvette à l'allongement donné.

Indices de cassage

Ces indices sont mesurés à 100° C. On détermine les propriétés à la rupture, contrainte rupture FR en Mpa et allongement rupture AR en % selon la norme ASTM D412-98. Les mesures sont effectuées sur des éprouvettes ASTM C.

Indices de déchirabilité

Ces indices sont mesurés à 100° C. On détermine la force rupture (FRD) en N/mm d'épaisseur et l'allongement rupture (ARD) en % sur une éprouvette de dimensions 10 x 105 x 2,5 mm entaillée en son centre sur une profondeur de 5 mm.

Pertes hystérétiques (PH)

Les pertes hystérétiques (PH), ou hystérèse, sont mesurées par rebond à 60° C selon la norme ISO R17667 et sont exprimées en %.

Propriétés dynamiques

Les caractéristiques dynamiques des matériaux sont réalisées sur une machine Schenck, selon la norme ASTM D 5992-96. On enregistre la réponse d'un échantillon de matériau vulcanisé (éprouvette cylindrique de 4 mm d'épaisseur et de 400 mm$^2$ de section), soumis à une sollicitation sinusoïdale en cisaillement simple alterné, à la fréquence de 10 Hz et à 60° C. On effectue un balayage en amplitude de déformation de 0,1 à 50 % (cycle aller), puis de 50 % à 0,1 % (cycle retour). On détermine au cycle aller le module de cisaillement maximum G*max en MPa et la valeur maximum de la tangente de l'angle de perte tg del max.

## EXEMPLES DE REALISATION DE L'INVENTION:

Ces exemples ont pour but de comparer entre elles des compositions à base de caoutchouc naturel (NR ci-après) renforcées avec du noir de carbone, selon des quantités de noir allant de 52 à 58 pce. Ces compositions sont détaillées dans le tableau 1 ci-après (en pce).
La composition 1 « témoin » est représentative de l'état de la technique connu, et elle comprend 52 pce de noir N347 à titre de charge renforçante.
Les compositions 2 à 7 selon l'invention comprennent un noir de carbone A pour les compositions 2 à 5, ou un noir de carbone B pour les compositions 6 et 7.
Le noir de carbone A est commercialisé sous la dénomination « CRX1416B » par la société CABOT, et le noir de carbone B est commercialisé sous la dénomination « EX 3-3 » par la société COLUMBIAN.
La composition 5 se différencie de la composition 4 en ce qu'elle comprend en outre un agent d'aide à la mise en oeuvre commercialisé par la société RHEIN CHEMIE sous le nom « AFLUX 42 », afin de réduire la viscosité de la composition 5 à l'état non réticulé).
Toutes ces compositions sont réticulables au soufre.

Tableau 1 :

|  | Comp. 1 | Comp. 2 | Comp. 3 | Comp. 4 | Comp. 5 | Comp. 6 | Comp. 7 |
|---|---|---|---|---|---|---|---|
| NR | 100 | 100 | 100 | 100 | 100 | 100 | 100 |
| Noir N347 | 52 |  |  |  |  |  |  |
| Noir A |  | 52 | 55 | 58 | 58 |  |  |
| Noir B |  |  |  |  |  | 55 | 58 |
| ZnO | 9 | 9 | 9 | 9 | 9 | 9 | 9 |
| Acide stéarique | 0,65 | 0,65 | 0,65 | 0,65 | 0,65 | 0,65 | 0,65 |
| Antioxydant | 1,50 | 1,50 | 1,50 | 1,50 | 1,50 | 1,50 | 1,50 |
| « AFLUX 42 » |  |  |  |  | 3 |  |  |
| Sel de cobalt* | 0,20 | 0,20 | 0,20 | 0,20 | 0,20 | 0,20 | 0,20 |
| Soufre insoluble | 7,6 | 7,6 | 7,6 | 7,6 | 7,6 | 7,6 | 7,6 |
| Accélérateur | 0,93 | 0,93 | 0,93 | 0,93 | 0,93 | 0,93 | 0,93 |
| * pce de cobalt métal | | | | | | | |

Le caoutchouc naturel (NR) qui est utilisé est peptisé et présente une viscosité Mooney ML (1+4) à 100 °C égale à 60.
L'antioxydant utilisé est la N-(1,3-diméthylbutyl)-N'-phényl-p-phénylènediamine.
Les noirs de carbone utilisés sont détaillés dans le tableau 2 ci-dessous :

Tableau 2 :

|  | N347 | Noir A | Noir B |
|---|---|---|---|
| CTAB en m$^2$/g | 88 | 55 | 50 |
| BET en m$^2$/g | 88 | 53 | 50 |
| IA en mg/g | 90 | 62 | 56 |

(suite)

|  | N347 | Noir A | Noir B |
|---|---|---|---|
| BET/ IA | 0,98 | 0,85 | 0,89 |
| DBP en ml/100 g | 124 | 134 | 130 |
| DBPC en ml/100 g | 100 | 94 | 88 |
| dst en nm | 77 | 131 | 133 |
| D50 en nm | 53 | 103 | 113 |
| D50/dst | 0,688 | 0,786 | 0,849 |

Ces compositions 1 à 7 sont obtenues en mélangeant tous les constituants précités, sauf le sel de cobalt, le soufre et l'accélérateur, par un travail thermomécanique dans un mélangeur interne en une étape qui dure environ 4 minutes avec une vitesse de rotation des palettes de 50 tours par minute, jusqu'à atteindre une température de tombée d'environ 170° C, suivie d'une étape de finition effectuée à 80° C, pendant laquelle sont incorporés le sel de cobalt, le soufre et l'accélérateur de vulcanisation.

La réticulation est effectuée à 150° C pendant un temps suffisant pour atteindre 99 % du couple maximum au rhéomètre.

On a comparé entre elles les propriétés de ces compositions 1 à 7 à l'état réticulé et à l'état non réticulé. Les résultats sont consignés dans le tableau 3 ci-après.

Tableau 3 :

|  | Comp. 1 | Comp. 2 | Comp. 3 | Comp. 4 | Comp. 5 | Comp. 6 | Comp. 7 |
|---|---|---|---|---|---|---|---|
| ML (1+4) à 100° C | 52 | 52 | 55 | 58 | 52 | 48 | 52 |
| Shore | 80 | 78 | 80 | 81 | 81 | 77 | 79 |
| **M10 en MPa** | 9,13 | 7,67 | 8,03 | 8,94 | 9,49 | 8,27 | 8,92 |
| **en base 100** | **100** | **84** | **88** | **98** | **104** | **89** | **96** |
| **PH en %** | 22,85 | 17,13 | 17,13 | 18,05 | 18,96 | 16,85 | 18,00 |
| **en base 100** | **100** | **75** | **75** | **79** | **83** | **74** | **79** |
| G* max 60° C | 8,24 | 5,76 | 6,43 | 8,82 | 8,04 |  |  |
| en base 100 | 100 | 70 | 78 | 107 | 97 |  |  |
| Tg del max 60° C | 0,163 | 0,130 | 0,132 | 0,142 | 0,139 |  |  |
| en base 100 | 100 | 80 | 81 | 87 | 85 |  |  |
| Cassage 100°C |  |  |  |  |  |  |  |
| FR en MPa | 16,0 | 14,7 | 14,1 | 15,1 | 14,1 | 14 | 14 |
| AR en % | 360 | 360 | 326 | 323 | 308 | 359 | 364 |
| Déchirabilité 100 °C |  |  |  |  |  |  |  |
| FRD en N/mm | 30 | 33 | 38 | . 34 | 25 | 36 | 29 |
| ARD en % | 97 | 84 | 87 | 87 | 77 | 88 | 85 |

Il apparaît que les noirs de carbone A ou B confèrent aux compositions 4, 5 et 7 selon l'invention des propriétés hystérétiques à haute déformation (PH à 60° C) qui sont améliorées de 17 % à 21 % par rapport à celles de la composition « témoin » comprenant le noir N347, ces compositions selon l'invention présentant par ailleurs un module d'allongement à faible déformation (M10) qui est voisin de celui de ladite composition « témoin», ce qui rend ces compositions selon l'invention particulièrement bien adaptées pour être utilisées dans l'armature de sommet de pneumatiques destinés à porter de lourdes charges.

On notera que les autres propriétés de ces compositions 4,5 et 7 selon l'invention sont comparables à celles de ladite composition « témoin ».

On notera également que l'incorporation dans la composition 5 de l'agent d'aide à la mise en oeuvre confère à cette composition 5 une viscosité à l'état non réticulé et, par conséquent, une aptitude à la mise en oeuvre qui est analogue à celle de la composition « témoin », et pratiquement sans pénaliser les propriétés hystérétiques de cette composition 5.

## Revendications

1. Enveloppe de pneumatique poids-lourd ou génie civil ayant une armature de sommet comportant une composition de caoutchouc réticulable ou réticulée présentant une hystérèse réduite à l'état réticulé, ladite composition comportant :

- une matrice élastomère comprenant du caoutchouc naturel ou un polyisoprène de synthèse à titre majoritaire, et
- une charge renforçante comprenant un noir de carbone,
**caractérisée en ce que** ledit noir de carbone satisfait à la fois aux conditions suivantes :

(i) 45 ≤ surface spécifique CTAB en m$^2$/g (selon la norme ASTM D3765-80) ≤ 70,
(ii) 45 ≤ surface spécifique BET en m$^2$/g (selon la norme ASTM D4820-93) ≤ 70,
(iii) 45 ≤ indice d'adsorption d'iode IA en mg/g (selon la norme ASTM D1510-81) ≤ 70
(iv) rapport (surface BET / indice IA) ≤ 1,07,
(v) 115 ≤ valeur de structure DBP en ml/100 g (selon la norme ASTM D2414-93) ≤ 170,
(vi) 85 nm ≤ diamètre de Stokes dst en nm ≤ 145,
où dst est le diamètre d'agrégats correspondant à la fréquence maximale des diamètres de Stokes dans une distribution d'agrégats, et
(vii)

$$D50/dst \geq 0,0090. \; CTAB + 0,19,$$

où D50 est la différence, dans la distribution d'agrégats, entre les diamètres de Stokes de deux agrégats correspondant à une même fréquence égale à 50 % de la fréquence maximale des diamètres de Stokes, dst et D50 étant mesurés par photo-sédimentométrie centrifuge.

2. Enveloppe de pneumatique selon la revendication 1, **caractérisée en ce que** ledit noir de carbone satisfait en outre à la condition suivante :

(viii) 80 ≤ valeur de structure DBPC en ml/100 g (selon la norme ASTM D3493-91) ≤ 130, la valeur DBPC étant mesurée après 4 compressions à 172*10$^4$ Pa.

3. Enveloppe de pneumatique selon la revendication 2, **caractérisée en ce que** ladite condition (viii) est la suivante :

(viii) 85 ≤ valeur de structure DBPC en ml/100 g ≤ 125.

4. Enveloppe de pneumatique selon une des revendications précédentes, **caractérisée en ce que** lesdites conditions (i) à (iii) sont les suivantes :

(i) 50 ≤ surface spécifique CTAB en m$^2$/g ≤ 65,
(ii) 50 ≤ surface spécifique BET en m$^2$/g ≤ 65,
(iii) 50 ≤ indice d'adsorption d'iode IA en mg/g ≤ 65.

5. Enveloppe de pneumatique selon une des revendications précédentes, **caractérisée en ce que** ladite condition (iv) est la suivante :

(iv) rapport (surface BET) / (indice IA) ≤ 1,05.

6. Enveloppe de pneumatique selon une des revendications précédentes, **caractérisée en ce que** ladite condition (v) est la suivante :

(v) 120 ≤ valeur de structure DBP en ml/ 100 g ≤ 165.

**7.** Enveloppe de pneumatique selon une des revendications précédentes, **caractérisée en ce que** ladite condition (vi) est la suivante :

(vi) 90 nm ≤ diamètre de Stokes dst en nm ≤ 140.

**8.** Enveloppe de pneumatique selon une des revendications précédentes, **caractérisée en ce que** ladite condition (vii) est la suivante :

(vii)

$$D50/dst \geq 0{,}0092. \: CTAB + 0{,}21.$$

**9.** Enveloppe de pneumatique selon une des revendications 1 à 8, **caractérisée en ce que** la matrice élastomère est constituée de caoutchouc naturel ou de polyisoprène de synthèse.

**10.** Enveloppe de pneumatique selon une des revendications 1 à 8, **caractérisée en ce que** ladite matrice élastomère comprend un coupage de caoutchouc naturel ou de polyisoprène de synthèse avec au moins un élastomère diénique fonctionnel ou non appartenant au groupe constitué par les polybutadiènes, les copolymères de styrène et de butadiène préparés en solution ou en émulsion, les copolymères de butadiène et d'isoprène et les terpolymères de styrène, de butadiène et d'isoprène, le caoutchouc naturel ou le polyisoprène de synthèse étant présents dans ladite composition selon une quantité supérieure à 70 pce (pce : parties en poids pour cent parties d'élastomères).

**11.** Enveloppe de pneumatique selon une des revendications précédentes, **caractérisée en ce que** ledit noir de carbone est présent à titre majoritaire dans ladite charge renforçante.

**12.** Enveloppe de pneumatique selon une des revendications précédentes, **caractérisée en ce qu'**elle comprend un coupage dudit noir de carbone et d'une charge inorganique renforçante, telle que de la silice.

**13.** Enveloppe de pneumatique selon une des revendications précédentes, **caractérisée en ce qu'**elle comprend ledit noir de carbone selon une quantité allant de 30 à 70 pce.

**Claims**

**1.** A heavy-vehicle or construction-vehicle tyre having a crown reinforcement comprising a cross-linkable or cross-linked rubber composition having a reduced hysteresis in the cross-linked state, said composition comprising:

- an elastomeric matrix comprising natural rubber or a synthetic polyisoprene in a majority proportion, and
- a reinforcing filler comprising a carbon black,
**characterised in that** said carbon black meets all of the following conditions:

(i) 45 ≤ CTAB specific surface area in $m^2/g$ (in accordance with Standard ASTM D3765-80) ≤ 70,
(ii) 45 ≤ BET specific surface area in $m^2/g$ (in accordance with Standard ASTM D4820-93) ≤ 70,
(iii) 45 ≤ iodine adsorption index IA in mg/g (in accordance with Standard ASTM D1510-81) ≤ 70
(iv) ratio (BET surface area / index IA) ≤ 1.07,
(v) 115 ≤ DBP structure value in ml/100 g (in accordance with Standard ASTM D2414-93) ≤ 170,
(vi) 85 nm ≤ Stokes diameter dst in nm ≤ 145,
where dst is the diameter of aggregates corresponding to the maximum frequency of the Stokes diameters in a distribution of aggregates, and
(vii)

$$D50/dst \geq 0.0090. \: CTAB + 0.19,$$

where D50 is the difference, in the distribution of aggregates, between the Stokes diameters of two aggregates corresponding to one and the same frequency equal to 50% of the maximum frequency of the Stokes diameters, dst and D50 being measured by centrifugal photosedimentometry.

2. A tyre according to Claim 1, **characterised in that** said carbon black furthermore meets the following condition:

(viii) $80 \leq$ DBPC structure value in ml/100 g (in accordance with Standard ASTM D3493-91) $\leq 130$, the value DBPC being measured after 4 compressions at $172 \times 10^4$ Pa..

3. A tyre according to Claim 2, **characterised in that** said condition (viii) is as follows:

(viii) $85 \leq$ DBPC structure value in ml/100 g $\leq 125$.

4. A tyre according to one of the preceding claims, **characterised in that** said conditions (i) to (iii) are as follows:

(i) $50 \leq$ CTAB specific surface area in $m^2/g \leq 65$,
(ii) $50 \leq$ BET specific surface area in $m^2/g \leq 65$,
(iii) $50 \leq$ iodine adsorption index IA in $mg/g \leq 65$.

5. A tyre according to one of the preceding claims, **characterised in that** said condition (iv) is as follows:

(iv)

$$\text{ratio (BET surface area) / (index IA)} \leq 1.05.$$

6. A tyre according to one of the preceding claims, **characterised in that** said condition (v) is as follows:

(v) $120 \leq$ DBP structure value in ml/100 g $\leq 165$.

7. A tyre according to one of the preceding claims, **characterised in that** said condition (vi) is as follows:

(vi) 90 nm $\leq$ Stokes diameter dst in nm $\leq 140$.

8. A tyre according to one of the preceding claims, **characterised in that** said condition (vii) is as follows:

(vii)

$$D50/dst \geq 0.0092 . \ CTAB + 0.21.$$

9. A tyre according to one of Claims 1 to 8, **characterised in that** the elastomeric matrix is formed of natural rubber or synthetic polyisoprene.

10. A tyre according to one of Claims 1 to 8, **characterised in that** said elastomeric matrix comprises a blend of natural rubber or of synthetic polyisoprene with at least one diene elastomer, whether functional or not, belonging to the group consisting of polybutadienes, styrene/butadiene copolymers prepared in solution or in emulsion, butadiene/ isoprene copolymers and styrene/butadiene/isoprene terpolymers, the natural rubber or the synthetic polyisoprene being present in said composition in a quantity greater than 70 phr (phr: parts by weight per hundred parts of elastomers).

11. A tyre according to one of the preceding claims, **characterised in that** said carbon black is present in a majority proportion in said reinforcing filler.

12. A tyre according to one of the preceding claims, **characterised in that** it comprises a blend of said carbon black and a reinforcing inorganic filler, such as silica.

**13.** A tyre according to one of the preceding claims, **characterised in that** it comprises said carbon black in a quantity of from 30 to 70 phr.

**Patentansprüche**

**1.** Mantel für LKW- oder Baumaschinenreifen mit einer Scheitellagenverstärkung, der eine vernetzbare oder vernetzte Kautschukzusammensetzung aufweist, die im vernetzten Zustand eine verringerte Hysterese aufweist, wobei die Zusammensetzung Folgendes umfasst:

- eine Elastomermatrix, die hauptsächlich Naturkautschuk oder ein Kunstpolyisopren aufweist und
- eine verstärkende Füllung, die einen Ruß aufweist,

**dadurch gekennzeichnet, dass** der Ruß gleichzeitig die folgenden Bedingungen erfüllt:

(i) $45 \leq$ spezifische CTAB-Oberfläche in m$^2$/g (gemäß der Norm ASTM D3765-80) $\leq 70$,
(ii) $45 \leq$ spezifische BET-Oberfläche in m$^2$/g (gemäß der Norm ASTM D4820-93) $\leq 70$,
(iii) $45 \leq$ Jodadsorptionsindex IA in mg/g (gemäß der Norm ASTM D1510-81) $\leq 70$,
(iv) Verhältnis (BET-Oberfläche/Index IA) $\leq 1,07$,
(v) $115 \leq$ DBP-Strukturwert in ml/100 g (gemäß der Norm ASTM D2414-93) $\leq 170$,
(vi) $85$ nm $\leq$ Stokes-Durchmesser dst in nm $\leq 145$,
wobei dst der Zusatzstoffdurchmesser ist, der der maximalen Frequenz der Stokes-Durchmesser in einer Zusatzstoffverteilung entspricht, und
(vii)

$$D50/dst \geq 0{,}0090. \ CTAB + 0{,}19,$$

wobei D50 der Unterschied in der Zusatzstoffverteilung zwischen den Stokes-Durchmessern von zwei Zusatzstoffen ist, die einer gleichen Frequenz gleich 50% der maximalen Frequenz der Stokes-Durchmesser entsprechen, wobei dst und D50 durch Zentrifugalphotosedimentometrie gemessen werden.

**2.** Reifenmantel nach Anspruch 1, **dadurch gekennzeichnet, dass** der Ruß ferner der folgenden Bedingung entspricht:

(viii) $80 \leq$ DBPC-Strukturwert in ml/100 g ist (gemäß der Norm ASTM D3493-91) $\leq 130$,

wobei der DBPC-Wert nach 4 Zusammendrückungen zu $172*10^4$ Pa gemessen wird.

**3.** Reifenmantel nach Anspruch 2, **dadurch gekennzeichnet, dass** die Bedingung (viii) die folgende ist:

(viii) $85 \leq$ DBPC-Strukturwert in ml/100 g $\leq 125$.

**4.** Reifenmantel nach einem der vorhergehenden Ansprüche, **dadurch gekennzeichnet, dass** die Bedingungen (i) bis (iii) die folgenden sind:

(i) $50 \leq$ spezifische CTAB-Oberfläche in m$^2$/g $\leq 65$,
(ii) $50 \leq$ spezifische BET-Oberfläche in m$^2$/g $\leq 65$,
(iii) $50 \leq$ Jodadsorptionsindex IA in mg/g $\leq 65$.

**5.** Reifenmantel nach einem der vorhergehenden Ansprüche, **dadurch gekennzeichnet, dass** die Bedingung (iv) die folgende ist:

(iv)

$$\text{Verhältnis (BET-Oberfläche)/(Index IA)} \leq 1{,}05.$$

**6.** Reifenmantel nach einem der vorhergehenden Ansprüche, **dadurch gekennzeichnet, dass** die Bedingung (v) die folgende ist:

(v) $120 \leq$ DBP-Strukturwert in ml/100 g $\leq 165$.

**7.** Reifenmantel nach einem der vorhergehenden Ansprüche, **dadurch gekennzeichnet, dass** die Bedingung (vi) die folgende ist:

(vi) 90 nm $\leq$ Stokes-Durchmesser dst in nm $\leq 140$.

**8.** Reifenmantel nach einem der vorhergehenden Ansprüche, **dadurch gekennzeichnet, dass** die Bedingung (vii) die folgende ist:

(vii)

$$D50/dst \geq 0,0092. \; CTAB + 0,21.$$

**9.** Reifenmantel nach einem der Ansprüche 1 bis 8, **dadurch gekennzeichnet, dass** die Elastomermatrix aus einem Naturkautschuk oder Kunstpolyisopren besteht.

**10.** Reifenmantel nach einem der Ansprüche 1 bis 8, **dadurch gekennzeichnet, dass** die Elastomermatrix einen Verschnitt aus Naturkautschuk oder Kunstpolyisopren mit mindestens einem funktionalen oder nicht funktionalen Dienkautschuk aufweist, der der Gruppe angehört, die aus den Polybutadienen, Styrolcopolymeren und -butadien vorbereitet in Lösung oder in Emulsion besteht, den Butadiencopolymeren und Isoprencopolymeren und den Styrolterpolymeren, Butadien und Isopren, wobei der Naturkautschuk oder das Kunstpolyisopren in der Zusammensetzung gemäß einer Menge größer als 70 pce (pce: Gewichtsanteile für einhundert Elastomerteile) gegenwärtig ist.

**11.** Reifenmantel nach einem der vorhergehenden Ansprüche, **dadurch gekennzeichnet, dass** der Ruß in der verstärkenden Füllung vorherrschend ist.

**12.** Reifenmantel nach einem der vorhergehenden Ansprüche, **dadurch gekennzeichnet, dass** er einen Verschnitt des Rußes und einer verstärkenden anorganischen Füllung, wie zum Beispiel Siliciumdioxid umfasst.

**13.** Reifenmantel nach einem der vorhergehenden Ansprüche, **dadurch gekennzeichnet, dass** er den Ruß in einer Menge von 30 bis 70 pce enthält.